(19) Europäisches Patentamt
European Patent Office
Office européen des brevets

(11) EP 3 337 772 B1

(12) **EUROPÄISCHE PATENTSCHRIFT**

(45) Veröffentlichungstag und Bekanntmachung des Hinweises auf die Patenterteilung:
**17.07.2024 Patentblatt 2024/29**

(21) Anmeldenummer: **16760407.3**

(22) Anmeldetag: **19.08.2016**

(51) Internationale Patentklassifikation (IPC):
***C04B 40/00*** *(2006.01)*

(52) Gemeinsame Patentklassifikation (CPC):
(C-Sets verfügbar)
**C04B 40/0039;** C04B 2103/14 (Forts.)

(86) Internationale Anmeldenummer:
**PCT/EP2016/069731**

(87) Internationale Veröffentlichungsnummer:
**WO 2017/032719 (02.03.2017 Gazette 2017/09)**

(54) **BESCHLEUNIGERZUSAMMENSETZUNG**

CATALYST COMPOSITION

STRUCTURE D'ACCELERATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2015 EP 15181990**

(43) Veröffentlichungstag der Anmeldung:
**27.06.2018 Patentblatt 2018/26**

(73) Patentinhaber: **BASF SE**
**67056 Ludwigshafen am Rhein (DE)**

(72) Erfinder:
- **GAEDT, Torben**
**83278 Traunstein (DE)**
- **HESSE, Christoph**
**85560 Ebersberg (DE)**

(74) Vertreter: **BASF IP Association**
**BASF SE**
**G-FLP-C006**
**67056 Ludwigshafen (DE)**

(56) Entgegenhaltungen:
**WO-A1-2010/026155 DE-T2- 69 407 418**
**GB-A- 2 283 260**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

**(Forts. nächste Seite)**

(52) Gemeinsame Patentklassifikation (CPC): (Forts.)

C-Sets
**C04B 40/0039, C04B 7/02, C04B 24/243;**
**C04B 40/0039, C04B 7/32, C04B 14/043, C04B 22/064, C04B 2103/408;**
**C04B 40/0039, C04B 7/32, C04B 22/00863, C04B 22/064, C04B 24/2605;**
**C04B 40/0039, C04B 7/32, C04B 22/00867, C04B 22/064, C04B 24/2641**

## Beschreibung

Die vorliegende Erfindung betrifft ein Verfahren zur Herstellung einer Zusammensetzung, welche sich als Beschleuniger für die Aushärtung von Zement eignet.

Bei der Zementhydratation reagieren die verschiedenen Zementklinkerphasen mit Wasser im Wesentlichen zu den Zementsteinphasen Calciumsilikathydrat, Ettringit, Calcium-Aluminat-Ferrit-Phasen, Monosulfat und Portlandit.

Aus der WO 2010026155 ist bekannt, die Zementhydratation durch Zugabe von Calciumsilikathydrat-Keimen zu Zement oder in Beton zu beschleunigen. Die Festigkeitsentwicklung eines Zements lässt sich durch die Zugabe von derartigen Calciumsilikathydrat-Keimen beschleunigen. Die Calciumsilikathydrat-Keime werden hierbei durch Umsetzung einer wasserlöslichen Calciumkomponente mit einer wasserlöslichen Siliziumkomponente in wässrigen Lösung in Anwesenheit eines wasserlöslichen Kammpolymers hergestellt, welches als Fließmittel für hydraulische Bindemittel geeignet ist.

Aus der DE 694 07 418 ist ein Erstarrungs- und Härtungsbeschleuniger für silikatische, hydraulische Bindemittel bekannt, der insbesondere aus der Hydratation von künstlichen Portland-Zementen, zerkleinerten Portland-Klinkern oder zusammengesetzten Portland-Zementen oder Mischungen der vorgenannten Ausgangsmaterialien hervorgeht. Die Beschleunigungswirkung ist für viele Anwendungen jedoch nicht ausreichend und es müssen größere Mengen dieses Beschleunigers eingesetzt werden, sodass auch die wirtschaftlich sinnvollen Einsatzmöglichkeiten begrenzt sind.

Die der vorliegenden Erfindung zugrunde liegende Aufgabe ist es, ein Verfahren zur Herstellung einer Zusammensetzung bereitzustellen, welche sich als Erhärtungsbeschleuniger für hydraulisch abbindende Bindemittel eignet und die Frühfestigkeitsentwicklung der hydraulisch abbindenden Bindemittel, insbesondere von Zement, verbessert. Unter Frühfestigkeitsentwicklung ist insbesondere die Druckfestigkeit 6 Stunden nach dem Anmischen mit Wasser des hydraulisch abbindenden Bindemittels oder einer hydraulisch abbindenden Bindemittelmischung zu verstehen. Weiterhin sollte die Zusammensetzung mit günstigen und leicht verfügbaren Rohstoffen wirtschaftlich günstig herstellbar sein.

Die Lösung dieser Aufgabe ist ein Verfahren zur Herstellung einer Zusammensetzung, welche sich als Beschleuniger für die Aushärtung von Zement eignet, wobei die Komponenten

aa) mindestens eine Komponente ausgewählt aus der Reihe hydraulische Bindemittel und/oder latent hydraulische Bindemittel und
bb) mindestens ein Dispergiermittel, welches für die Dispergierung anorganischer Partikel in Wasser geeignet ist und
cc) Wasser,

miteinander in Kontakt gebracht werden, wobei das in Kontakt bringen unter Einbringen von Scherenergie stattfindet, wobei mehr als 100 kWh Scherenergie pro Tonne der Zusammensetzung eingebracht werden und wobei das Gewichtsverhältnis der

Komponente aa) zu cc) zwischen 1,5 zu 1 und 1 zu 70 liegt und wobei das Gewichtsverhältnis der Komponente aa) zu bb) zwischen 20 zu 1 und 1 zu 2 liegt.

Überraschend hat sich hierbei ergeben, dass nicht nur die gestellte Aufgabe in vollem Umfang gelöst werden konnte, sondern dass die erfindungsgemäß hergestellte Zusammensetzung keine unerwünschten Salze aus dem Herstellungsprozess erhält. Weiterhin bevorzugt umfasst bb), das mindestens eine Dispergiermittel, ein wasserlösliches Polymer, enthaltend bevorzugt mindestens zwei Monomerbausteine. Es kann aber auch vorteilhaft sein, Copolymere mit drei oder mehr Monomerbausteinen zu verwenden.

Unter "wasserlösliche Polymere" im Sinne der vorliegenden Anmeldung werden Polymere verstanden, welche in Wasser bei 20 °C und Normaldruck eine Löslichkeit von mindestens 1 Gramm pro Liter, insbesondere mindestens 10 Gramm pro Liter und besonders bevorzugt von mindestens 100 Gramm pro Liter aufweisen.

In einer bevorzugten Ausführungsform umfasst das mindestens eine Dispergiermittel Polyethergruppen der Struktureinheit (I),

$$*\text{-U-(C(O))}_k\text{-X-(AlkO)}_n\text{-W} \qquad \text{(I)}$$

wobei

- * die Bindungsstelle an das Polymer anzeigt,
- U für eine chemische Bindung oder eine Alkylengruppe mit 1 bis 8 C-Atomen steht,
- X Sauerstoff, Schwefel oder eine Gruppe $NR^1$ bedeutet,
- k 0 oder 1 ist,
- n für eine ganze Zahl steht, deren Mittelwert, bezogen auf das Polymer im Bereich von 3 bis 300 liegt,
- Alk für $C_2$-$C_4$-Alkylen steht, wobei Alk innerhalb der Gruppe $(Alk\text{-}O)_n$ gleich oder verschieden sein kann,
- W einen Wasserstoff-, einen $C_1$-$C_6$-Alkyl- oder einen Arylrest bedeutet oder die Gruppe Y-F bedeutet, wobei

Y für eine lineare oder verzweigte Alkylengruppe mit 2 bis 8 C-Atomen steht, die einen Phenylring tragen kann,

F für einen über Stickstoff gebundenen 5- bis 10-gliedrigen Stickstoffheterocyclus steht, der als Ringglieder, neben dem Stickstoffatom und neben Kohlenstoffatomen, 1 , 2 oder 3 zusätzliche Heteroatome, ausgewählt unter Sauerstoff, Stickstoff und Schwefel aufweisen kann, wobei die Stickstoffringlieder eine Gruppe $R^2$ aufweisen können, und wobei 1 oder 2 Kohlenstoffringglieder als Carbonylgruppe vorliegen können,

$R^1$ für Wasserstoff, $C_1$-$C_4$-Alkyl oder Benzyl steht, und

$R^2$ für Wasserstoff, $C_1$-$C_4$-Alkyl oder Benzyl steht.

Besonders bevorzugt umfasst das erfindungsgemäße Dispergiermittel mindestens eine Gruppe aus der Reihe Carboxyester-, Carboxy-, Phosphono-, Sulfino-, Sulfo-, Sulfamido-, Sulfoxy-, Sulfoalkyloxy-, Sulfinoalkyloxy und Phosphonooxygruppe. insbesondere bevorzugt umfasst das erfindungsgemäße Polymer eine Säuregruppe. Unter dem Begriff "Säuregruppe" wird in der vorliegenden Anmeldung sowohl die freie Säure als auch deren Salze verstanden. Bevorzugt kann es sich bei der Säure um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe handeln. Besonders bevorzugt sind Carboxy- und Phosphonooxygruppen.

In einer besonders bevorzugten Ausführungsform umfasst das Dispergiermittel ein Polykondensationsprodukt, enthaltend

(II) eine einen Aromaten oder Heteroaromaten und die Polyethergruppe aufweisende Struktureinheit sowie
(III) eine phosphatierte einen Aromaten oder Heteroaromaten aufweisende Struktureinheit.

Die Struktureinheiten (II) und (III) werden bevorzugt durch folgende allgemeine Formeln repräsentiert

(II) $A\text{-}U\text{-}(C(O))_k\text{-}X\text{-}(AlkO)_n\text{-}W$

mit

A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen;

(III)

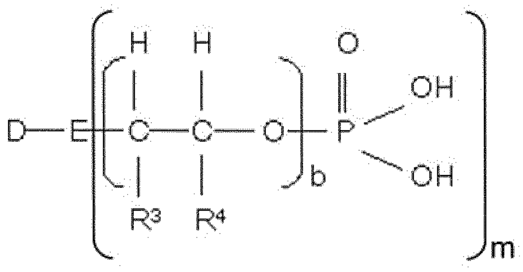

mit

D gleich oder verschieden sowie repräsentiert durch eine substituierte oder unsubstituierte aromatische oder heteroaromatische Verbindung mit 5 bis 10 C-Atomen im aromatischen System.

Weiterhin ist E gleich oder verschieden sowie repräsentiert durch N, NH oder O, m = 2 falls E = N und m = 1 falls E = NH oder O.

$R^3$ und $R^4$ sind unabhängig voneinander gleich oder verschieden sowie repräsentiert durch einen verzweigten oder unverzweigten $C_1$- bis $C_{10}$-Alkylrest, $C_5$- bis $C_8$-Cycloalkylrest, Arylrest, Heteroarylrest oder H, bevorzugt durch H, Methyl, Ethyl oder Phenyl, besonders bevorzugt durch H oder Methyl und insbesondere bevorzugt durch H. Weiterhin ist b gleich oder verschieden sowie repräsentiert durch eine ganze Zahl von 0 bis 300. Falls b = 0 ist E = O. Besonders bevorzugt ist D = Phenyl, E = O, $R^3$ und $R^4$ = Hund b = 1.

Bevorzugt enthält das Polykondensationsprodukt eine weitere Struktureinheit (IV), welche durch folgende Formel repräsentiert wird

(IV)

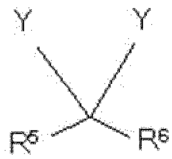

mit
Y unabhängig voneinander gleich oder verschieden und repräsentiert durch (II), (III) oder weitere Bestandteile des Polykondensationsproduktes.

$R^5$ und $R^6$ sind bevorzugt gleich oder verschieden und repräsentiert durch H, $CH_3$, COOH oder eine substituierte oder unsubstituierte aromatische oder heteroaromatische Verbindung mit 5 bis 10 C-Atomen. Hierbei werden $R^5$ und $R^6$ in Struktureinheit (IV) unabhängig voneinander bevorzugt durch H, COOH und/oder Methyl repräsentiert.

In einer besonders bevorzugten Ausführungsform werden $R^5$ und $R^6$ durch H repräsentiert.

Das molare Verhältnis der Struktureinheiten (II), (III) und (IV) des erfindungsgemäßen phosphatierten Polykondensationsproduktes kann in weiten Bereichen variiert werden. Als zweckmäßig hat es sich erwiesen, dass das Molverhältnis der Struktureinheiten [(II) + (III)] : (IV) 1 : 0,8 bis 3, bevorzugt 1 : 0,9 bis 2 und besonders bevorzugt 1: 0,95 bis 1,2 beträgt.

Das Molverhältnis der Struktureinheiten (II) : (III) liegt normalerweise bei 1 : 10 bis 10 : 1, bevorzugt bei 1 : 7 bis 5 : 1 und besonders bevorzugt bei 1 : 5 bis 3 : 1.

Die Gruppen A und D in den Struktureinheiten (II) und (III) des Polykondensationsproduktes werden meist durch Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl bevorzugt Phenyl repräsentiert, wobei A und D unabhängig voneinander gewählt werden können und auch jeweils aus einem Gemisch der genannten Verbindungen bestehen können. Die Gruppen X und E werden unabhängig voneinander bevorzugt durch O repräsentiert.

Bevorzugt wird n in Struktureinheit (I) durch eine ganze Zahl von 5 bis 280, insbesondere 10 bis 160 und besonders bevorzugt 12 bis 120 repräsentiert und b in Struktureinheit (III) durch eine ganze Zahl von 0 bis 10, bevorzugt 1 bis 7 und besonders bevorzugt 1 bis 5. Die jeweiligen Reste, deren Länge durch n bzw. b definiert wird, können hierbei aus einheitlichen Baugruppen bestehen, es kann aber auch zweckmäßig sein, dass es sich um eine Mischung aus unterschiedlichen Baugruppen handelt. Weiterhin können die Reste der Struktureinheiten (II) und (III) unabhängig voneinander jeweils die gleiche Kettenlänge besitzen, wobei n bzw. b jeweils durch eine Zahl repräsentiert wird. Es wird aber in der Regel zweckmäßig sein, dass es sich jeweils um Mischungen mit unterschiedlichen Kettenlängen handelt, so dass die Reste der Struktureinheiten im Polykondensationsprodukt für n und unabhängig für b unterschiedliche Zahlenwerte aufweisen.

In einer besonderen Ausführungsform sieht die vorliegende Erfindung weiterhin vor, dass es sich um ein Natrium-, Kalium-, Ammonium- und/oder Calcium-Salz und bevorzugt um ein Natrium- und/oder Kalium-Salz, des phosphatierten Polykondensationsproduktes handelt. Häufig weist das erfindungsgemäße phosphatierte Polykondensationsprodukt ein gewichtsmittleres Molekulargewicht von 5000 g/mol bis 150.000 g/mol, vorzugsweise 10.000 bis 100.000 g/mol und besonders bevorzugt 20.000 bis 75.000 g/mol auf. Bezüglich der gemäß vorliegender Erfindung bevorzugt zu verwendenden phosphatierten Polykondensationsprodukte und deren Herstellung wird weiterhin auf die Patentanmeldungen WO 2006/042709 und WO 2010/040612 Bezug genommen.

In einer weiteren bevorzugten Ausführungsform handelt es sich bei dem Dispergiermittel um mindestens ein Copolymer, welches erhältlich ist durch Polymerisation einer Mischung von Monomeren, umfassend

(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und

(VI) mindestens ein ethylenisch ungesättigtes Monomer umfassend die Polyethergruppe, wobei die Polyethergruppe bevorzugt durch die Struktureinheit (I) repräsentiert wird.

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

In einer bevorzugten Ausführungsform wird das ethylenisch ungesättigte Monomer (V) durch mindestens eine der folgenden allgemeinen Formeln aus der Gruppe (Va), (Vb) und (Vc) repräsentiert:

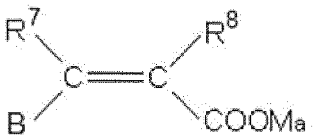

(Va)

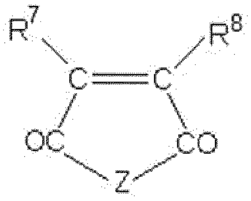

(Vb)

Bei dem Mono- oder Dicarbonsäure-Derivat (Va) und dem in cyclischer Form vorliegenden Monomer (Vb), wobei Z = O (Säureanhydrid) oder $NR^{16}$ (Säureimid) darstellen, steht $R^7$ und $R^8$ unabhängig voneinander für Wasserstoff oder einen aliphatischen Kohlenwasserstoffrest mit 1 bis 20 C-Atomen, vorzugsweise eine Methylgruppe. 8 bedeutet H, $-COOM_a$, $-CO-O(C_qH_{2q}O)_r-R^9$, $-CO-NH-(C_qH_{2q}O)_r-R^9$.

M bedeutet Wasserstoff, ein ein-, zwei- oder dreiwertiges Metallkation, vorzugsweise Natrium-, Kalium-, Calcium- oder Magnesium-Ion, weiterhin Ammonium oder ein organischer Aminrest sowie a = 1/3, 1/2 oder 1, je nachdem, ob es sich bei M um ein ein-, zwei- oder dreiwertiges Kation handelt. Als organische Aminreste werden vorzugsweise substituierte Ammonium-Gruppen eingesetzt, die sich ableiten von primären, sekundären oder tertiären $C_{1-20}$-Alkylaminen, $C_{1-20}$-Alkanolaminen, $C_{5-8}$-Cycloalkylaminen und $C_{6-14}$-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

$R^9$ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2, 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Weiterhin steht Z für O oder $NR^{16}$, wobei $R^{16}$ unabhängig voneinander gleich oder verschieden sowie repräsentiert wird durch einen verzweigten oder unverzweigten $C_1$- bis $C_{10}$-Alkylrest, $C_5$- bis $C_8$-Cycloalkylrest, Arylrest, Heteroarylrest oder H.

Die folgende Formel stellt das Monomer (Vc) dar:

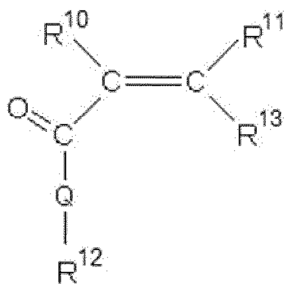

(Vc)

Hierbei steht $R^{10}$ und $R^{11}$ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen.

Weiterhin ist $R^{12}$ gleich oder verschieden und wird durch $(C_nH_{2n})-SO_3H$ mit n = 0, 1, 2, 3 oder 4, $(C_nH_{2n})-OH$ mit n = 0, 1, 2, 3 oder 4; $(C_nH_{2n})-PO_3H_2$ mit n = 0, 1, 2, 3 oder 4, $(C_nH_{2n})-OPO_3H_2$ mit n = 0, 1, 2, 3 oder 4, $(C_6H_4)-SO_3H$, $(C_6H_4)-PO_3H_2$, $(C_6H_4)-OPO_3H_2$ und $(C_nH_{2n})-NR^{14}_b$ mit n = 0, 1, 2, 3 oder 4 und b durch 2 oder 3 repräsentiert.

$R^{13}$ bedeutet H, $-COOM_a$, $-CO-O(C_qH_{2q}O)_r-R^9$, $-CO-NH-(C_qH_{2q}O)_r-R^9$, wobei $M_a$, $R^9$, q und r die oben genannte Bedeutungen besitzen.

$R^{14}$ steht für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

Weiterhin ist Q gleich oder verschieden sowie repräsentiert durch NH, $NR^{15}$ oder O, wobei $R^{15}$ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.

In einer besonders bevorzugten Ausführungsform wird das ethylenisch ungesättigte Monomer (VI) durch folgende allgemeine Formeln (Via) repräsentiert

(VIa)

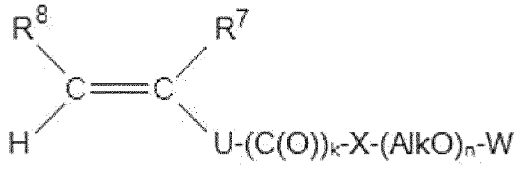

worin alle Reste die oben genannten Bedeutungen aufweisen.

In einer weiterhin bevorzugten Ausführungsform wird das ethylenisch ungesättigte Monomer (VI) durch folgende allgemeine Formeln (VIb) repräsentiert

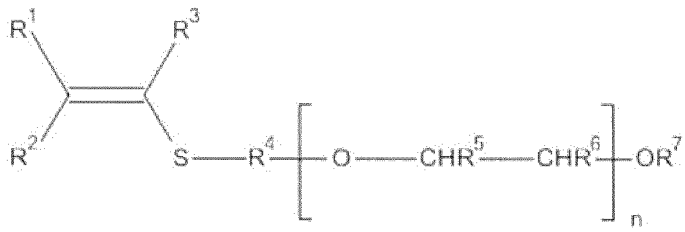

(VIb)

wobei

$R^1$, $R^2$, $R^3$ unabhängig voneinander, gleich oder verschieden, H, $CH_3$,
$R^4$ lineares oder verzweigtes $C_1$-$C_{30}$-Alkylen,
$R^5$, $R^6$ unabhängig voneinander, gleich oder verschieden, H, $C_1$-$C_{20}$-Alkyl, $C_3$-$C_{15}$-Cycloalkyl, Aryl, -$CH_2$-O-$C_1$-$C_{20}$-Alkyl, $CH_2$-O-$C_2$-$C_{20}$-Alkenyl,
wobei $R^5$ und $R^6$ auch gemeinsam ein $C_3$-$C_6$-Alkylen bilden können,
$R^7$ unabhängig voneinander, gleich oder verschieden, H, $C_1$-$C_4$-Alkyl,

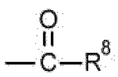

$R^8$ $C_1$-$C_{22}$-Alkyl, $C_2$-$C_{22}$-Alkenyl, und
n unabhängig voneinander gleich oder verschieden ist und eine ganze Zahl von 2 bis 200 bedeuten.

Insbesondere weist das Copolymer ein mittleres Molgewicht (Mw) zwischen 5000 und 150.000 g/mol, besonders bevorzugt 10,000 bis 80,000 g/mol und ganz besonders bevorzugt 15,000 bis 60,000 g/mol auf, welches durch Gelpermeationschromatographie bestimmt wird.

Die Polymere werden mittels Größenausschlusschromatographie auf mittlere Molmasse und Umsatz analysiert (Säulenkombinationen: Shodex OH-Pak SB 804 HQ und OH-Pak SB 802.5 HQ von Showa Denko, Japan; Elutionsmittel: 80 Vol.-% wässrige Lösung von $HCO_2NH_4$ (0,05 molll) und 20 Vol.-% MeOH; Injektionsvolumen 100 μl: Flussrate 0,5 ml/min)).

Vorzugsweise erfüllt das erfindungsgemäße Copolymer die Anforderungen der Industrienorm EN 934-2 (Februar 2002).

Eine weiterhin bevorzugte Ausführungsform der vorliegenden Anmeldung ist ein erfindungsgemäßes Verfahren, bei dem die Komponenten

aa) mindestens eine Komponente ausgewählt aus der Reihe hydraulische Bindemittel und/oder latent hydraulische Bindemittel und
bb) mindestens ein Dispergiermittel, welches für die Dispergierung anorganischer Partikel in Wasser geeignet ist und
cc) Wasser,

solange miteinander in Kontakt gebracht werden, dass

der Schwebstoffanteil M größer als 25 Gew.-% ist,
wobei M nach folgender Methode bestimmt wird:

a) Herstellen einer Suspension, wobei 2 Gramm der Zusammensetzung, bezogen auf den Feststoffanteil, auf 100 ml Volumen mit destilliertem Wasser aufgefüllt werden
b) Umfüllen der Suspension in einen Messzylinder, so dass eine Höhe von 20 cm im Messzylinder erreicht wird
c) 24 Stunden bei 20 °C stehen lassen
d) Vollständiges dekantieren des Überstands in ein Becherglas
e) Quantitative Bestimmung der Masse m und des Feststoffgehalt FG für

i) das Sediment im Messzylinder ($m_{Sediment}$ und $FG_{Sediment}$) und
ii) den Überstand ($m_{Überstand}$ und $FG_{Überstand}$),

wobei der Schwebstoffanteil M wie folgt berechnet wird:

$$M = FG_{Überstand} \cdot m_{Überstand} / (FG_{Sediment} \cdot m_{Sediment} + FG_{Überstand} \cdot m_{Überstand}) \cdot 100\ \%.$$

In einer besonders bevorzugten Ausführungsform ist der Schwebstoffanteil M der Zusammensetzung größer als 35 Gew.-%, insbesondere größer als 40 Gew.-%, 45 Gew.-%, 50 Gew.-%, 55 Gew.-%, 60 Gew.-%, 65 Gew.-%, 70 Gew.-%, 75 Gew.-%, und besonders bevorzugt größer als 80 Gew.-%.

Insbesondere findet das in Kontakt bringen der Komponenten unter Vermischen statt. Hierzu sind praktisch alle dem Fachmann bekannten Einrichtungen geeignet.

Unter Vermischen oder Mischen ist im Rahmen dieser Erfindung ein Vermengen oder Homogenisieren zu verstehen, das den Kontakt der der zu vermischenden Komponenten intensiviert und damit eine gleichmäßige und/oder rasche Bildung des gewünschten Produktes ermöglichen soll. Durch das Vermischen kann ein möglichst homogenes Gemisch erzeugt und/oder eine chemische Reaktion eingeleitet oder beschleunigt werden.

Methoden, die ein Vermischen bewirken sind beispielsweise Rühren, Schütteln, das Eindüsen von Gasen oder Flüssigkeiten und das Bestrahlen mit Ultraschall. Geeignete Verfahren und Vorrichtungen, die ein Vermischen bewirken, sind dem Fachmann bekannt. Geeignete Mischapparaturen sind beispielsweise Rührkessel, dynamische und statische Mischer, einwellige Rührwerke, beispielsweise Rührwerke mit Abstreifvorrichtungen, insbesondere sogenannte Pastenrührwerke, mehrwellige Rührwerke, insbesondere PDSM-Mischer, Feststoffmischer sowie Misch-/Knetreaktoren. Vorteilhaft für die Umsetzungsgeschwindigkeit und Produktqualität sind hierbei Verfahren die eine hohe Scherenergie einbringen. Insbesondere bevorzugt wird das erfindungsgemäße Verfahren deshalb zumindest zeitweise unter Verwendung einer Vorrichtung aus der Reihe Zahnkolloidmühle, Perlmühle, Kugelmühle, Ultraschall-Geräte, Rotor-Stator (z.B. IKA Ultra-Turrax) und Dissolver-Scheibe durchgeführt.

Erfindungsgemäß findet das in Kontakt bringen unter Einbringen von Scherenergie statt, wobei mehr als 100 kWh, insbesondere mehr als 500 kWh, bevorzugt mehr als 1000 kWh, insbesondere 200 bis 10.000 kWh, insbesondere bevorzugt 300 bis 3000 kWh Scherenergie pro Tonne der Zusammensetzung eingebracht werden.

Die angegebene Scherenergie bezieht sich auf die von der verwendeten Apparatur während der Mahlung von einer Tonne der Zusammensetzung aufgenommene Leistung.

Insbesondere kann das Einbringen von Scherenergie in einer Rührwerkskugelmühle durchgeführt werden. Die Rührwerkskugelmühle umfasst eine Mahlkörper enthaltende Mahlkammer, einem Stator und einem Rotor, welche in der Mahlkammer angeordnet sind. Weiterhin bevorzugt umfasst die Rührwerkskugelmühle eine Mahlgut-Einlassöffnung und eine Mahlgut-Auslassöffnung zum Zuführen und Abführen von Mahlgut in die bzw. aus der Mahlkammer, sowie einer in der Mahlkammer stromauf von der Auslassöffnung angeordneten Mahlkörper-Trenneinrichtung, die dazu dient, in dem Mahlgut mitgeführte Mahlkörper aus dem Mahlgut abzutrennen, bevor dieses durch die Auslassöffnung aus dem Mahlraum abgeführt wird.

Um die in das Mahlgut in der Mahlkammer eingetragene mechanische Mahlleistung zu steigern, sind bevorzugt am Rotor und/oder am Stator Stifte vorhanden, die in den Mahlraum ragen. Im Betrieb wird somit einerseits auf direktem Wege durch Stöße zwischen dem Mahlgut und den Stiften ein Beitrag zur Mahlleistung erbracht. Andererseits erfolgt ein weiterer Beitrag zur Mahlleistung auf indirektem Wege, durch Stöße zwischen den Stiften und den im Mahlgut mitgeführten Mahlkörpern und den dann wiederum erfolgenden Stößen zwischen dem Mahlgut und den Mahlkörpern. Schließlich tragen auch noch auf das Mahlgut einwirkende Scherkräfte und Dehnkräfte zur Zerkleinerung der suspendierten Mahlgutpartikel bei.

In einer weiterhin bevorzugten Ausführungsform liegt das Gewichtsverhältnis der Komponente aa) zu bb) zwischen 10 zu 1 und 1 zu 2, insbesondere zwischen 5 zu 1 und 1 zu 1,5, insbesondere bevorzugt zwischen 3 zu 1 und 1 zu 1. Weithin bevorzugt kann das Gewichtsverhältnis der Komponente aa) zu cc) zwischen 1 zu 1 und 1 zu 10 liegen.

Das in Kontakt bringen der erfindungswesentlichen Komponenten kann auch vorteilhaft zeitversetzt erfolgen. Hierbei ist es bevorzugt zunächst die Komponenten aa) und cc) miteinander in Kontakt zu bringen und erst nachfolgen die Komponente bb) zuzugeben. Hierdurch kann bei gleicher Wirksamkeit des erhaltenen Produkts die Menge an eingesetztem Dispergiermittel verringert werden. Insbesondere kann die Komponente bb) zwischen 5 und 60 Minuten, insbesondere zwischen 15 und 45 Minuten und besonders bevorzugt zwischen 20 und 40 Minuten nach dem in Kontakt bringen der Komponenten aa) und cc) zugegeben werden.

In einer weiteren bevorzugten Ausführungsform wird ein Teil der Komponente bb) beim Vermischen der Komponenten aa) und cc) zugegeben und der übrige Teil der Komponente bb) zwischen 0.01 $t_M$ und 1,00 tw, insbesondere zwischen 0,25 $t_M$ und 1,00 $t_M$ und besonders bevorzugt zwischen 0,5 $t_M$, und 1,00 $t_M$ nach dem in Kontakt bringen der Komponenten aa) und cc) zugegeben. $t_M$ ist dabei die gesamte Mischdauer des Verfahrens zu Herstellung der Zusammensetzung.

Bei der Komponente aa) werden unter hydraulischen Bindemittel, insbesondere Zement auf Basis Portlandzement (EN 197), Zement mit besonderen Eigenschaften (DIN 1164), Weißzement, Calciumaluminatzement bzw. Tonerdezement (EN 14647), Calciumsulfoaluminatzement und Spezialzemente verstanden.

Im Rahmen der Anmeldung sind unter latent hydraulischen Bindemittel insbesondere Puzzolan, vulkanische Schlacke, vulkanischer Tuff, Flugasche, Hochofenschlacke, Mikrosilika, Kaolin, Metakaolin, aktivierter Ton, Traß, Puzzolanerde, Kieselgur, sowie Diatomeenerde in Verbindung mit einem alkalischen Anreger, insbesondere bevorzugt Wasserglas, zu verstehen.

Besonders bevorzugt handelt es sich bei Komponente aa) um ein hydraulisches Bindemittel, insbesondere Portlandzement, bevorzugt Weißzement.

In einer bevorzugten Ausführungsform bestehen die Komponenten, welche bei dem erfindungsgemäßen Verfahren miteinander in Kontakt gebracht werden, zu mindestens 50 Gew.-%, bevorzugt mindestens 70 Gew.-%, insbesondere mindestens 80 Gew.-%, besonders bevorzugt mindestens 90 Gew.-% aus den Komponenten aa), bb) und cc). Insbesondere können die Komponenten, welche bei dem erfindungsgemäßen Verfahren miteinander in Kontakt gebracht werden, aus den Komponenten aa), bb) und cc) bestehen.

In einer bevorzugten Ausführungsform wird als weitere Komponente dd) eine $SiO_2$-Quelle einsetzt, wie z.B. Kolloidales $SiO_2$, hochdisperse Kieselsäure (z.B. Aerosil, Sipernat), Microsilica oder Flugasche in dem erfindungsgemäßen Verfahren eingesetzt. In Frage kommen hierbei insbesondere Mengen zwischen 1 und 20 Gew.-%, insbesondere 5 bis 15 Gew.-%, bezogen auf alle eingesetzten Komponenten. Weiterhin kann als weitere Komponente ee) eine Calciumsulfat-Quelle eingesetzt werden. In Frage kommen hierbei insbesondere Mengen zwischen 1 und 10 Gew.-%, insbesondere 2 bis 8 Gew.-%, bezogen auf alle eingesetzten Komponenten. Vorteilhaft ist weiterhin in dem erfindungsgemäßen Verfahren eine Komponente ff) einzusetzen, welche Calciumsilikathydrat in fein verteilter Form enthält. Besonders geeignet sind beispielsweise die in der WO 2010026155 auf Seite 37 bis 42 beschriebenen Zusammensetzungen. In Frage kommen hierbei insbesondere Mengen zwischen 1 und 15 Gew.-%, insbesondere 2 bis 10 Gew.-%, bezogen auf alle eingesetzten Komponenten.

Das erfindungsgemäße Verfahren kann bei Raumtemperatur und Normaldruck durchgeführt werden. Um die Reaktion zu beschleunigen ist es jedoch möglich auch höhere Temperaturen zu wählen und ggf. unter erhöhtem Druck zu arbeiten. Vorteilhaft kann das Verfahren bei Temperaturen zwischen 50 °C und 250 °C durchgeführt werden. Hierbei kann ein Druck von bis zu 40 bar angewendet werden.

Die Erfindung betrifft auch die Verwendung der erfindungsgemäß hergestellten Zusammensetzungen zur Erhärtungsbeschleunigung von bauchemischen Mischungen, enthaltend Zement, Schlacke, vorzugsweise granulierte Hochofenschlacke, Flugasche, Silikamehl, Metakaolin, natürliche Puzzolane, kalzinierten Ölschiefer, Kalziumsulfoaluminatzemente und/oder Kalziumaluminatzemente, vorzugsweise in bauchemischen Mischungen, die überwiegend Zement als hydraulisches Bindemittel enthalten.

Die Dosierung de erfindungsgemäß hergestellten Zusammensetzungen beträgt vorzugsweise von 0,01 Gew.-% bis 15 Gew.-%, bevorzugt 0,1 Gew.-% bis 6 Gew.-%, besonders bevorzugt 0,1 Gew.-% bis 5 Gew.-% des Feststoffes der Zusammensetzungen bezogen auf die anorganischen Bindemittel Zement, Schlacke, vorzugsweise granulierte Hochofenschlacke, Flugasche, Silikamehl, Metakaolin, natürliche Puzzolane, kalzinierten Ölschiefer, Kalziumsulfoaluminatzemente und/oder Kalziumaluminatzemente. Die Dosierung der erfindungsgemäß hergestellten

Zusammensetzungen beträgt vorzugsweise von 0,01 Gew.-% bis 15 Gew.-%, bevorzugt 0,1 Gew.-% bis 8 Gew.-%, besonders bevorzugt 0,5 Gew.-% bis 5 Gew.-% des Feststoffes der Zusammensetzungen bezogen auf Zement.

Bevorzugt ist der Zement ausgewählt aus Portlandzement, Tonerdeschmelzzement, Calciumsulfoaluminatzement oder Mischungen aus den genannten Zementtypen. Insbesondere bevorzugt ist Zement vom Typ Portlandzement.

**Beispiele**

Bestimmung des Schwebstoffanteil M

Der Schwebstoffanteil M beschreibt die Sedimentationsneigung der partikulären Suspension und ergibt sich aus dem Verhältnis des Feststoffes im Überstand nach einer gewissen Zeit zum Feststoff der gesamten Suspension. Zur Bestimmung des Schwebstoffanteils M werden folgende Schritte durchgeführt:

a) Bestimmen des Leergewichts $m_0$ eines 100 ml Standzylinders
b) Herstellen einer Suspension, wobei 2 Gramm der erfindungsgemäßen Zusammensetzung, bezogen auf den Feststoffanteil, in den Standzylinder gegeben werden und der Standzylinder auf 100 ml Volumen mit destilliertem Wasser aufgefüllt und durch Schütteln homogenisiert wird. Der Verdünnungsschritt hat zum Ziel, dass während des Sedimentierens im Gravitationsfeld die Partikel-Partikel-Wechselwirkungen reduziert werden und so der Sedimentationsvorgang entsprechend dem Stokesschen Gesetz ablaufen kann. Die Höhe der Suspension in Standzylinder erreicht dabei 20 cm.
c) Die Suspension wird für 24 Stunden bei 20 °C stehen gelassen. Dabei wird der Standzylinder abgedeckt, um eine Verdunstung von Wasser zu minimieren.
d) Nach 24 Stunden wird der Überstand vom abgesetzten Sediment durch Dekantieren abgetrennt. Der Überstand wird dazu in ein bereitgestelltes Becherglas überführt, dessen Leergewicht $m_{0(\text{Überstand})}$ vorher ermittelt wurde. Dabei ist unbedingt zu vermeiden, dass das abgesetzte Sediment sich mit dem Überstand wieder vermischt. Ein Vermischen des Sediments mit dem Überstand würde die Bestimmung des Schwebstoffanteils M verfälschen.
e) Die Masse des Sediments $m_{Sediment}$ wird nach dem Dekantieren bestimmt durch Auswiegen des Standzylinders inklusive Sediment und Subtraktion des Leergewichts $m_0$ des Standzylinders.
f) Die Masse des Überstands $m_{Überstand}$ wird nach dem Dekantieren bestimmt durch Auswiegen des Becherglases inkl. dem Überstand und Subtraktion des Leergewichts des Becherglases $m_{0(\text{Überstand})}$.
g) Sediment und Überstand werden erneut homogenisiert
h) Von Sediment und Überstand wird jeweils eine Probe genommen und von dieser wird jeweils der Feststoffgehalt durch Trocknung bis zur Gewichtskonstanz der Probe bei 105 °C ermittelt. Bevorzugt wird hierfür eine Trocknungswaage mit Infrarotheizung verwendet. Alternativ kann die Bestimmung des Feststoffgehalts auch durch Lagerung der Probe für 6 Stunden im Trockenschrank bei 105 °C erfolgen. Aus der Trocknung ergeben sich somit die Feststoffgehalte für den Überstand $FG_{Überstand}$ sowie dem Sediment $FG_{Sediment}$.
i) Aus den ermittelten Werten wird abschließend der Schwebstoffanteil M wie folgt berechnet:

$$M = FG_{\text{Überstand}} \cdot m_{\text{Überstand}} / (FG_{\text{Sediment}} \cdot m_{\text{Sediment}} + FG_{\text{Überstand}} \cdot m_{\text{Überstand}}) \cdot 100\ \%.$$

Je höher der Schwebstoffanteil M ist, desto weniger Partikel sind nach 24 Stunden sedimentiert. Demzufolge weist ein Schwebstoffanteil M = 100 % darauf hin, dass die erfindungsgemäße Suspension keinerlei Sedimentation aufweist.

Kalorimetrie

Zur Einschätzung der Beschleunigungsleistung der Proben wurden Messungen mittels isothermer Wärmeflusskalorimetrie am Gerät TAMAir von TA Instruments durchgeführt.

Polymer 1 und 2:

Allgemeine Vorschrift zur Herstellung von Polymer 1 und 2:
In einem 1-Liter Vierhalskolben mit Thermometer, Rückflusskühler und einem Anschluss für zwei Zuläufe werden 875 g einer 40 %igen wässrigen Lösung von Polyethylenglycolhydroxybutyl-monovinylether und NaOH (20 %) vorgelegt. Bezüglich der Molmassen der jeweiligen Polyethylenglycolhydroxybutyl-monovinylether sind die Details in der Tabelle B zu finden. Danach wird die Lösung auf 20 °C abgekühlt. Zu der Polyethylenglycol-hydroxybutyl-monovinylether-Lösung im Vorlagekolben wird nun langsam Acrylsäure (99 %) zugegeben. Der pH-Wert nimmt dabei auf ca. 4-5 ab. Anschließend werden 0,5 g Eisen(II)sulfat-Heptahydrat sowie 5 g Rongalit und Mercaptoethanol zugegeben. Nach kurzem Einrühren werden weiterhin 3 g 50 % Wasserstoffperoxid zudosiert. Die Temperatur steigt dabei von 20 °C auf ca. 30 °C bis 65 °C an. Die Lösung wird anschließend 10 Minuten gerührt, bevor sie mit Natronlauge (20 %) neutralisiert wird. Man erhält eine leicht gelb gefärbte, klare wässrige Polymerlösung mit variablen Feststoffgehalt. Alle variablen Mengenangaben für die bei der Herstellung der Polycarboxylatether Polymer 1 und Polymer 2 verwendeten Chemikalien (NaOH, Mercaptoethanol und Acrylsäure) und die Molmassen des jeweiligen Polyethylenglycol-hydroxybutyl-monovinylethers sind den untenstehenden Tabellen A und B zu entnehmen.

Tabelle A: Details zur Herstellung der Polymere 1 und 2

| | NaOH (20 %) [g] | Mercaptoethanol [g] | Acrylsäure (99 %) [g] |
|---|---|---|---|
| Polymer 1 | 40 | 6,0 | 122,8 |
| Polymer 2 | 20 | 2,7 | 84,9 |

Die Tabelle B bietet eine Übersicht über die strukturellen Parameter der als Sprühhilfsmittel verwendeten Polycarboxylatether.

Tabelle B: Übersicht der strukturellen Parameter der PCEs

| Additiv (PCE) | A | B | C | Feststoffgehalt (Gew.-%) |
|---|---|---|---|---|
| Polymer 1 | 1/900 | 28537 | 5800 | 33,2 |
| Polymer 2 | 11372 | 23239 | 3000 | 35,1 |
| A: Ladungsdichte (Molzahl Carboxylat- und/oder Carboxylgruppen / Gesamtmolmasse des PCEs) (mol / (g/mol))<br>B: Gewichtsmittleres Molekulargewicht $M_w$ (g/mol)<br>C: Molmasse des eingesetzten Polyethylenglycolhydroxybutyl-monovinylethers (g/mol) | | | | |

Polymer 3:

Das Polymer 3 ist ein Kondensat aus den Bausteinen PhenolPEG5000, Phenoxyethanolphosphat und Formaldehyd. Das Molekulargewicht Mw beträgt 25730 g/mol. Das Polymer wurde entsprechend Polymer 7 der WO2015/091461 (Tabelle 1 und 2) hergestellt. Der Feststoffgehalt ist 33,7 Gew.-%.

Polymer 4:

Das Polymer 4 ist ein Kammpolymer polymerisiert aus einem Hydroxyethylmethacrylat Phosphorsäureester und einem Ester von Methacrylsäure und Methylpolyethylenglykol mit einem Molekulargewicht von 5.000 g / mol. Die Synthese wurde entsprechend der Herstellung von P1 aus der WO2014/026938 durchgeführt. Das Molekulargewicht Mw beträgt 36600 g/mol. Der Feststoffgehalt der Polymerlösung beträgt 28,8 Gew.-%

BNS:

BNS ist ein kommerziell verfügbares Dispergiermittel, basierend auf Naphtalinsulfonat. Es wurde das Produkt Flube CA 40 von Giovanni Bozetto S.p.A. verwendet. Der Feststoffgehalt ist 42 Gew.-%.

Blank

50 g Milke CEM I 52,5 R wurden vermischt mit 40 g Wasser und für 90 Sekunden mit einem IKA Flügelrührer bei 750 U/min homogeniert. Von diesem homogenen Zementleim wurden 3 g der isothermen Wärmeflusskalorimetrie zugeführt.

Beispiel 1 (illustrativ)

In eine 2 Liter PE-Kunststoffflasche wurden 50 g Aalborg White Zement CEM I 52,5 R eingewogen. Anschließend wurden 40 g eines Polycarboxylatethers (Dispergiermittel; Markenbezeichnung: Melflux 6681 F) in die Kunststoffflasche eingewogen. Zu dieser Mischung wurden 900 g Leitungswasser hinzugefügt. Die Flasche wurde mit einem Kunststoffdeckel verschlossen und stark mit den Händen geschüttelt bis kein Bodensatz mit noch trockenem Zement mehr vorhanden war. Dann wurde ein Magnetrührfisch zugegeben und die Mischung wurde bei 250 Umdrehungen pro

Minute für 2 Monate bei 23°C gerührt.

Es entsteht eine Suspension mit einem Feststoffgehalt von 10,1 Gew.-%. Der Feststoffgehalt wird durch Trocknen der Probe bei 105 °C bis zur Massenkonstanz ermittelt.

Schwebstoffanteil M: 80,1 %

Beispiel 2 (Vergleichsbeispiel)

In eine 2 Liter PE-Kunststoffflasche wurden 50 g Aalborg White Zement CEM I 52,5 R eingewogen. Zu dem Zement wurden 900 g Leitungswasser hinzugefügt. Die Flasche wurde mit einem Kunststoffdeckel verschlossen und stark mit den Händen geschüttelt bis kein Bodensatz mit noch trockenem Zement mehr vorhanden war. Dann wurde ein Magnetrührfisch zugegeben und die Mischung wurde bei 250 Umdrehungen pro Minute für 2 Monate bei 23°C gerührt. Dabei entsteht eine weiße partikuläre Suspension, welche innerhalb kürzester Zeit nahezu vollständig sedimentiert, wenn sie nicht gerührt wird.

Es entsteht eine Suspension mit einem Feststoffgehalt von 6,1 Gew.-%. Der Feststoffgehalt wird durch Trocknen der Probe bei 105 °C bis zur Massenkonstanz ermittelt.
Schwebstoffanteil M: 29,2 %

Vergleichsbeispiel V1

100 g Milke CEM I 52,5 R wurden vermischt mit 40 g Wasser und für 90 Sekunden mit einem IKA Flügelrührer bei 500 U/min homogenisiert. Von diesem homogenen Zementleim wurden 3 g der isothermen Wärmeflusskalorimetrie zugeführt.

Vergleichsbeispiel V2

100 g Milke CEM I 52,5 R wurden mit 12,5 g der Probe aus Beispiel 2 und 28,26 g Wasser vermischt. Somit ist das Wasser/Zement-Verhältnis gleich 0,4. 3 g des homogenen Zementleims, der die Probe aus Beispiel 2 enthält, wurden anschließend der isothermen Wärmeflusskalorimetrie zugeführt.

Illustratives Beispiel

K1 (Kalorimetrie)

100 g Milke CEM I 52,5 R wurden mit 12,5 g der Probe aus Beispiel 1 und 28,76 g Wasser vermischt. Somit ist das Wasser/Zement-Verhältnis gleich 0,4. 3 g des homogenen Zementleims, der die Probe aus Beispiel 1 enthält, wurden anschließend der isothermen Wärmeflusskalorimetrie zugeführt.

Tabelle 1 fasst die Ergebnisse zusammen:

| Versuch | Beschleunigungsfaktor entsprechend L. Nicoleau (2012) | Kumulierte Hydratationswärme nach 6 h in Joule/Gramm (Zement) |
|---|---|---|
| V1 | 1,00 | 23,3 |
| V2 | 1,05 | 26,4 |
| K1 | 1,75 | 47,3 |

Zum Vergleich der Proben wurden jeweils die maximalen Steigungen im Wärmefluss zwischen 2 und 8 Stunden ermittelt und diese auf die Steigung der Vergleichsmessung V1 bezogen. Die Bestimmung der relativen Steigung wurde entsprechend der Veröffentlichung von L. Nicoleau (2012) durchgeführt (L. Nicoleau: The acceleration of cement hydration by seeding: Influence of the cement mineralogy. Ibausil 18. Internationale Baustofftagung in Weimar (2012), Tagungsband Seiten 1-0330 - 1-0337). Die Hydratationswärme korreliert dabei mit der Entstehung der Frühfestigkeit einer Zement enthaltenden Baustoffmischung (Vortrag C. Hesse (2014): Kleine Teilchen mir großer Wirkung - Neue Wege der Beschleunigung. 6. HeidelbergCement Bauchemie-Tage in Münster, 03./04. April 2014 in Münster)

Figur 1 zeigt für die Versuche V1 und K1 den Wärmefluss im mW/Gramm Zement über die Zeit.

Allgemeines Beispiel 3: Mahlung im Rüttler

In eine 0,5 Liter Duranglasflasche wurden 1000 g ZrOz-Mahlkugeln mit Durchmesser 0,8 - 1 mm eingewogen. Es wurde tariert und für Beispiele 3.1 bis 3.11 wurden 20 g Aalborg White Zement CEM I 52,5 R zugegeben. Für Beispiele 3.12 bis 3.14 wurden 20 g einer Mischung aus 1:1 (w/w) Aalborg White CEM I 52,5 R und Hüttensand Salzgitter. Nach

Tabelle 2 wurde eine Polymerlösung der Polymere 1, 2, 3, 4 oder BNS zugegeben, so dass ein spezifisches Verhältnis von Zement zu Polymer entstand. Die Polymerdosierung bezieht sich hierbei auf den Feststoffgehalt an Polymer in der Polymerlösung. Im Folgenden wurde die zu 200 g fehlende Masse mit deionisiertem Wasser aufgefüllt. Die Flasche wurde mit einem Kunststoffdeckel verschlossen. Jeweils 4 Flaschen wurden in einem Rüttler (SK 300 von Fast & Fluid Management) arretiert und für eine definierte Dauer geschüttelt (vergl. Tabelle 2). Die entstandene Suspension wurde in ein Sieb abgeschüttet und die Mahlkugeln mit 50 ml Wasser von anhaftender Suspension abgewaschen. Der Feststoffgehalt der Suspension wurde durch Trocknen der Probe bei 130 °C bis zur Gewichtskonstanz ermittelt.

Tabelle 2: Mahlung im Rüttler

| Beispiel | Polymer | Zement* / Polymer Verhältnis [w/w] | Geschüttelt für [min] | A | B | C |
|---|---|---|---|---|---|---|
| Blank | - | - | - | 0 | 21,3 | 0,44 |
| 3.1 | - | 0 | 120 | 0 | 55,1 | 0,53 |
| 3.2 | - | 0 | 240 | 0 | 61,0 | 0,65 |
| 3.3 | 1 | 4 | 120 | 93 | 77,3 | 1,24 |
| 3.4 | 1 | 4 | 240 | 93 | 83,7 | 1,15 |
| 3.5 | BNS | 100 | 120 | 0 | 56,5 | 0,58 |
| 3.6 | 1 | 100 | 120 | 0 | 52,8 | 0,59 |
| 3.7 | 1 | 20 | 120 | 73 | 61,7 | 0,80 |
| 3.8 | 1 | 10 | 120 | 91 | 68,6 | 0,97 |
| 3.9 | 2 | 4 | 120 | 62 | 71,0 | 1,26 |
| 3.10 | 3 | 4 | 120 | 96 | 89,3 | 1,22 |
| 3.11 | 4 | 4 | 120 | 64 | 84,4 | 1,14 |
| 3.12 | - | 0 | 120 | 0 | 56,3 | 0,66 |
| 3.13 | 1 | 20 | 120 | 43 | 61,8 | 0,77 |
| 3.14 | 1 | 4 | 120 | 94 | 72,0 | 0,97 |
| A: Schwebstoffanteil M in [%]<br>B: Kumulierte Hydratationswärme nach 6 h in [Joule/Gramm(Zement)]<br>C: Beschleunigungsfaktor entsprechend L. Nicoleau (2012) [d(HF)/dt]<br>Zement*: unter Zement wird Aalborg White Zement CEM I 52,5 R oder die Mischung aus 1:1 (w/w) Aalborg White CEM I 52,5 R und Hüttensand verstanden | | | | | | |

Bei den Beispielen 3.1 und 3.5 handelt es sich um Vergleichsbeispiele entsprechend der DE69407418. Da in der DE69407418 kein konkretes Dispergiermittel und keine Einsatzmenge offenbart wurde, wurde in Beispiel 3.5 als Standard Dispergiermittel BNS in einer üblicherweise verwendeten Menge eingesetzt.

Für die Beispiele 3.1, 3.3 und 3.5 wurde der Sedimentationsfaktor nach Vorgabe der DE69407418 bestimmt: a) Die in den Beispielen erhaltenen Suspensionen wurden in einen Sedimentationszylinder überführt, so dass 10 g, bezogen auf den in der Suspension enthaltenen Feststoffgehalt enthalten sind. b) Anschließend wurde mit entionisiertem Wasser, unter Berücksichtigung des in der Suspension erhaltenen Wassers, auf 100 ml aufgefüllt. c) Die Suspension wurde durch Schütteln homogenisiert und bei 20 °C für 48 h stehen gelassen. Dann wurde die Sedimentationsrückstandshöhe am Zylinder abgelesen.

| | |
|---|---|
| Beispiel 3.1: | 100 % |
| Beispiel 3.3: | 28 % |
| Beispiel 3.5: | 100 % |

Allgmeines Beispiel 4: Mahlung in der Rührwerkskugelmühle

Ein 3,0 Liter Becherglas wurde tariert und 200 g Aalborg White Zement CEM I 52,5 R zugegeben. Ggf. wurde nach Tabelle 3 eine Polymerlösung zugegeben, so dass ein spezifisches Verhältnis von Zement zu Polymer von 4

entstand. Die Polymerdosierung bezieht sich hierbei auf den Feststoffgehalt an Polymer in der Polymerlösung. Im Folgenden wurde die zu 2000 g fehlende Masse mit entionisiertem Wasser aufgefüllt. Diese Suspension wurde bis zur Homogenität gerührt, anschließend in den Vorratsbehälter der Rührwerkskugelmühle gegeben und dort sofort mit einen IKA-Überkopfrührer gerührt, damit keine Entmischung auftrat.

Für die Mahlung wurde eine Rührwerkskugelmühle des Typs LabStar 01 der Firma Netzsch verwendet. Die Mahlung erfolgte in einer Mantel-gekühlten Mahlkammer (Mahlraumvolumen von 0,93 Liter) mit SiC-Auskleidung, so dass die Temperatur der im Kreislauf gepumpten Suspensionen 30 °C betrug. Im Inneren der Mahlkammer befand sich ein Polyurethan-Scheibenrührwerk (Typ PU-TriNex-993.06/A4). Die Mahlkammer wurde mit $ZrO_2$-Kugeln (Durchmesser von 0,8 - 1,0 mm) zu einem Mahlkörperfüllgrad von 85 Vol-% gefüllt. Um dieses Schüttvolumen an Kugeln zu erhalten, wurden 586,5 ml Kugeln in einem Standzylinder ausgemessen und anschließend in die Mahlkammer gegeben.

Die Suspension wurde mittels einer Schlauchpumpe der Firma Ismatec (Ismatec-MCP-Prozess-IP65) für eine definierte Zeit (vergl. Tabelle 2) mit einem Pumpvermögen (Pumpgeschwindigkeit) von 22 Liter/Stunde im Kreislauf durch die Rührwerkskugelmühle gepumpt. Die Umdrehungszahl des Rührwerkes der Kugelmühle betrug 3500 Umdrehungen pro Minute.

Nach Ablauf der vorgegebenen Mahlzeit wurde die gemahlene Suspension in einen PE-Behälter gefüllt.

Die spezifische Energie $E_m$ der Mahlung wurde ermittelt über den Zusammenhang:

$$E_m = P \cdot \frac{t}{m} \quad \text{[kWh/Tonne]}$$

Wobei P die real aufgenommene Wellenleistung in Kilowatt ist und an der Rührwerkskugelmühle abgelesen wurde, t ist die Mahldauer in Stunden und *m* die Masse an der eingesetzten und im Kreis gepumpten Suspension.

Tabelle 3: Mahlung in der Rührwerkskugelmühle

| Beispiel | Polymer | Mahldauer [min] | A | B | C | D |
|---|---|---|---|---|---|---|
| 4.1 | - | 120 | 0 | 51,2 | 0,54 | 1970 |
| 4.2 | 1 | 120 | 92 | 58,4 | 0,94 | 1870 |
| 4.3 | 1 | 240 | 92 | 76,9 | 1,24 | 3720 |

A: Schwebstoffanteil M in [%]
B: Kumulierte Hydratationswärme nach 6 h in [Joule/Gramm(Zement)]
C: Beschleunigungsfaktor entsprechend L. Nicoleau (2012) [d(HF)/dt]
D: Spezifische Energie $E_m$ in [kWh/Tonne (Suspension)]

Bestimmung der kumulierten Hydratationswärme in den Beispielen 3 und 4:

a) Von einer Suspension aus Beispiel 3 oder 4 wurden 1 Gramm, bezogen auf den in der Suspension ursprünglich enthaltenen Zementgehalt, in einen Becher eingewogen.
b) Unter Berücksichtigung des durch die Suspension zugegebenen Wassers wurde die Gesamtwassermenge mit entionisiertem Wasser auf 20 g ergänzt. c) Anschließend wurden 50 g Milke CEM I 52,5 R hinzugegeben. d) Die Komponenten wurden mit einem IKA Flügelrührer bei 750 U/min homogenisiert, e) Von diesem homogenen Zementleim wurden 3 g der isothermen Wärmeflusskalorimetrie zugeführt.

## Patentansprüche

1. Verfahren zur Herstellung einer Zusammensetzung, welche sich als Beschleuniger für die Aushärtung von Zement eignet, wobei die Komponenten

   aa) mindestens ein hydraulisches Bindemittel und
   bb) mindestens ein Dispergiermittel, welches für die Dispergierung anorganischer Partikel in Wasser geeignet ist und
   cc) Wasser,
   miteinander in Kontakt gebracht werden, wobei das in Kontakt bringen unter Einbringen von Scherenergie stattfindet, wobei mehr als 100 kWh Scherenergie pro Tonne der Zusammensetzung eingebracht werden und

wobei das Gewichtsverhältnis der Komponente aa) zu cc) zwischen 1,5 zu 1 und 1 zu 70 liegt, **dadurch gekennzeichnet, dass**
das Gewichtsverhältnis der Komponente aa) zu bb) zwischen 20 zu 1 und 1 zu 2 liegt.

**2.** Verfahren nach Anspruch 1, **dadurch gekennzeichnet, dass** das mindestens eine Dispergiermittel ein wasserlösliches Polymer mit Polyethergruppen der Struktureinheit (I),

$$*\text{-U-(C(O))}_k\text{-X-(AlkO)}_n\text{-W} \qquad \text{(I)}$$

wobei

* die Bindungsstelle an das Polymer anzeigt,
U für eine chemische Bindung oder eine Alkylengruppe mit 1 bis 8 C-Atomen steht,
X Sauerstoff, Schwefel oder eine Gruppe $NR^1$ bedeutet,
k 0 oder 1 ist,
n für eine ganze Zahl steht, deren Mittelwert, bezogen auf das Polymer im Bereich von 3 bis 300 liegt,
Alk für $C_2$-$C_4$-Alkylen steht, wobei Alk innerhalb der Gruppe $(Alk\text{-}O)_n$ gleich oder verschieden sein kann,
W einen Wasserstoff-, einen $C_1$-$C_6$-Alkyl- oder einen Arylrest bedeutet oder die Gruppe Y-F bedeutet, wobei
Y für eine lineare oder verzweigte Alkylengruppe mit 2 bis 8 C-Atomen steht, die einen Phenylring tragen kann,
F für einen über Stickstoff gebundenen 5- bis 10-gliedrigen Stickstoffheterocyclus steht, der als Ringglieder, neben dem Stickstoffatom und neben Kohlenstoffatomen, 1, 2 oder 3 zusätzliche Heteroatome, ausgewählt unter Sauerstoff, Stickstoff und Schwefel aufweisen kann, wobei die Stickstoffringlieder eine Gruppe $R^2$ aufweisen können, und wobei
$R^1$ 1 oder 2 Kohlenstoffringglieder als Carbonylgruppe vorliegen können, für Wasserstoff, $C_1$-$C_4$-Alkyl oder Benzyl steht, und
$R^2$ für Wasserstoff, $C_1$-$C_4$-Alkyl oder Benzyl steht, umfasst.

**3.** Verfahren nach Anspruch 1 oder 2, **dadurch gekennzeichnet, dass** das mindestens eine Dispergiermittel mindestens eine Gruppe aus der Reihe Carboxyester-, Carboxy-, Phosphono-, Sulfino-, Sulfo-, Sulfamido-, Sulfoxy-, Sulfoalkyloxy-, Sulfinoalkyloxy und Phosphonooxygruppe umfasst.

**4.** Verfahren nach Anspruch 1, **dadurch gekennzeichnet, dass** das mindestens eine Dispergiermittel ein Polykondensationsprodukt umfasst, enthaltend

(II) eine einen Aromaten oder Heteroaromaten und eine Polyethergruppe aufweisende Struktureinheit,
(III) eine phosphatierte einen Aromaten oder Heteroaromaten aufweisende Struktureinheit.

**5.** Verfahren nach Anspruch 4, **dadurch gekennzeichnet, dass** die Struktureinheiten (II) und (III) durch folgende allgemeine Formeln repräsentiert werden

$$\text{(II)} \qquad \text{A-U-(C(O))}_k\text{-X-(AlkO)}_n\text{-W}$$

mit

A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen;

(III)

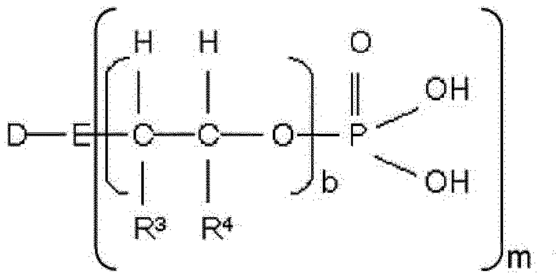

mit
D gleich oder verschieden sowie repräsentiert durch eine substituierte oder unsubstituierte aromatische oder heteroaromatische Verbindung mit 5 bis 10 C-Atomen im aromatischen System
mit
E gleich oder verschieden sowie repräsentiert durch N, NH oder O
mit
m = 2 falls E = N und m = 1 falls E = NH oder O
mit
$R^3$ und $R^4$ unabhängig voneinander gleich oder verschieden sowie repräsentiert durch einen verzweigten oder unverzweigten $C_1$- bis $C_{10}$-Alkylrest, $C_5$- bis $C_8$-Cycloalkylrest, Arylrest, Heteroarylrest oder H
mit b
gleich oder verschieden sowie repräsentiert durch eine ganze Zahl von 0 bis 300.

6. Verfahren nach Anspruch 4 oder 5, **dadurch gekennzeichnet, dass** das Polykondensationsprodukt eine weitere Struktureinheit (IV) enthält, welche durch folgende Formel repräsentiert wird

(IV)

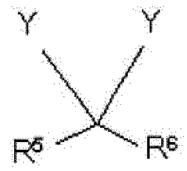

mit
Y unabhängig voneinander gleich oder verschieden und repräsentiert durch (II), (III) oder weitere Bestandteile des Polykondensationsproduktes.

7. Verfahren nach Anspruch 1 oder 2, **dadurch gekennzeichnet, dass** das mindestens eine Dispergiermittel mindestens ein Copolymer umfasst, welches erhältlich ist durch Polymerisation einer Mischung von Monomeren, umfassend

(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(VI) mindestens ein ethylenisch ungesättigtes Monomer umfassend eine Polyethergruppe.

8. Verfahren nach Anspruch 7, **dadurch gekennzeichnet, dass** das ethylenisch ungesättigte Monomer (V) durch mindestens eine der folgenden allgemeinen Formeln aus der Gruppe (Va), (Vb) und (Vc) repräsentiert wird

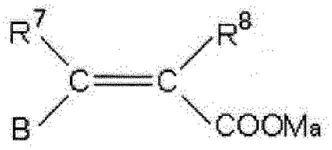

(Va)

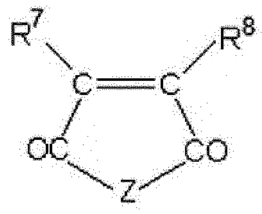

(Vb)

wobei

$R^7$ und $R^8$ unabhängig voneinander für Wasserstoff oder einen aliphatischen Kohlenwasserstoffrest mit 1 bis 20 C-Atomen
B für H, $-COOM_a$, $-CO-O(C_qH_{2q}O)_r-R^9$, $-CO-NH-(C_qH_{2q}O)_r-R^9$
M für Wasserstoff, ein ein-, zwei- oder dreiwertiges Metallkation, Ammoniumion oder einen organischen Aminrest
a für 1/3, 1/2 oder 1
$R^9$ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede $(C_qH_{2q}O)$-Einheit gleich oder verschieden 2, 3 oder 4 und
r für 0 bis 200
Z für O, $NR^{16}$
$R^{16}$ unabhängig voneinander gleich oder verschieden sowie repräsentiert durch einen verzweigten oder unverzweigten $C_1$- bis $C_{10}$-Alkylrest, $C_5$-bis $C_8$-Cycloalkylrest, Arylrest, Heteroarylrest oder H

stehen,

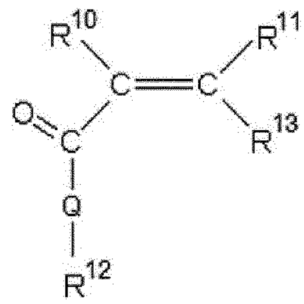

(Vc)

mit

$R^{10}$ und $R^{11}$ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
$R^{12}$ gleich oder verschieden sowie repräsentiert durch $(C_nH_{2n})-SO_3H$ mit n = 0, 1, 2, 3 oder 4, $(C_nH_{2n})$-OH mit n = 0, 1, 2, 3 oder 4; $(C_nH_{2n})-PO_3H_2$ mit n = 0, 1, 2, 3 oder 4, $(C_nH_{2n})-OPO_3H_2$ mit n= 0, 1, 2, 3 oder 4, $(C_6H_4)-SO_3H$, $(C_6H_4)-PO_3H_2$, $(C_6H_4)-OPO_3H_2$ und $(C_nH_{2n})-NR^{14}_b$ mit n = 0, 1, 2, 3 oder 4 und b = 2 oder 3
$R^{13}$ für H, $-COOM_a$, $-CO-O(C_qH_{2q}O)_r-R^9$, $-CO-NH-(C_qH_{2q}O)_r-R^9$, wobei $M_a$, $R^9$, q und r oben genannte Bedeutungen besitzen
$R^{14}$ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.
Q gleich oder verschieden sowie repräsentiert durch NH, $NR^{15}$ oder O; wobei $R^{15}$ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.

9. Verfahren nach einem der Ansprüche 1 bis 8, **dadurch gekennzeichnet, dass** das mindestens eine Dispergiermittel mindestens ein wasserlösliches Polymer umfasst, welches ein mittleres Molgewicht (Mw) zwischen 5000 und 150.000 g/mol aufweist, welches durch Gelpermeationschromatographie bestimmt wird.

**10.** Verfahren nach einem der Ansprüche 1 bis 9, wobei die Komponenten

aa) mindestens eine Komponente ausgewählt aus der Reihe hydraulische Bindemittel und/oder latent hydraulische Bindemittel und
bb) mindestens ein Dispergiermittel, welches für die Dispergierung anorganischer Partikel in Wasser geeignet ist und
cc) Wasser,
solange miteinander in Kontakt gebracht werden, dass
der Schwebstoffanteil M größer als 25 Gew.-% ist,
wobei M nach folgender Methode bestimmt wird:

a) Herstellen einer Suspension, wobei 2 Gramm der Zusammensetzung, bezogen auf den Feststoffanteil, auf 100 ml Volumen mit destilliertem Wasser aufgefüllt werden
b) Umfüllen der Suspension in einen Messzylinder, so dass eine Höhe von 20 cm im Messzylinder erreicht wird
c) 24 Stunden bei 20 °C stehen lassen
d) Vollständiges dekantieren des Überstands in ein Becherglas
e) Quantitative Bestimmung der Masse m und des Feststoffgehalt FG für

i) das Sediment im Messzylinder ($m_{Sediment}$ und $FG_{Sediment}$) und
ii) den Überstand ($m_{Überstand}$ und $FG_{Überstand}$),

wobei der Schwebstoffanteil M wie folgt berechnet wird:

$$M = FG_{Überstand} \cdot m_{Überstand} / (FG_{Sediment} \cdot m_{Sediment} + FG_{Überstand} \cdot m_{Überstand}) \cdot 100\ \%.$$

**11.** Verfahren nach einem der Ansprüche 1 bis 10, **dadurch gekennzeichnet, dass** das Gewichtsverhältnis der Komponente aa) zu bb) zwischen 10 zu 1 und 1 zu 2 liegt.

**12.** Verfahren nach einem der Ansprüche 1 bis 11, **dadurch gekennzeichnet, dass** es sich bei der Komponente aa) um ein hydraulisches Bindemittel, insbesondere Portlandzement handelt.

**13.** Verwendung einer Zusammensetzung hergestellt gemäß einem der Ansprüche 1 bis 10, zur Erhärtungsbeschleunigung von bauchemischen Mischungen, enthaltend Zement, Schlacke, vorzugsweise granulierte Hochofenschlacke, Flugasche, Silikamehl, Metakaolin, natürliche Puzzolane, kalzinierten Ölschiefer, Kalziumsulfoaluminatzemente und/oder Kalziumaluminatzemente, vorzugsweise in bauchemischen Mischungen, die überwiegend Zement als hydraulisches Bindemittel enthalten.

## Claims

**1.** A process for producing a composition suitable as accelerator for the curing of cement, by contacting the components

aa) at least one hydraulic
binder and
bb) at least one dispersant suitable for the dispersing of inorganic particles in water, and
cc) water,
where said contacting takes place with introduction of shearing energy, with more than 100 kWh of shearing energy being introduced per metric ton of composition, and
where the weight ratio of components aa) to cc) is between 1.5:1 and 1:70, wherein
the weight ratio of components aa) to bb) is between 20:1 and 1:2.

**2.** The process according to claim 1, wherein said at least one dispersant comprises a water-soluble polymer having polyether groups of the structural unit (I),

$$*\text{-U-(C(O))}_k\text{-X-(AlkO)}_n\text{-W} \qquad \text{(I)}$$

where

* indicates the site of bonding to the polymer,
U is a chemical bond or an alkylene group having 1 to 8 carbons,
X is oxygen, sulfur or a group $NR^1$,
k is 0 oder 1,
n is an integer whose average value, based on the polymer, is in the range from 3 to 300,
Alk is $C_2$-$C_4$ alkylene, and within the group $(Alk-O)_n$ Alk may be identical or different,
W is a hydrogen, a $C_1$-$C_6$ alkyl or an aryl radical or is the group Y-F, where
Y is a linear or branched alkylene group having 2 to 8 carbons and may carry a phenyl ring,
F is a 5- to 10-membered nitrogen heterocycle which is bonded via nitrogen and which as ring members, besides the nitrogen atom and besides carbon atoms, may have 1, 2 or 3 additional heteroatoms selected from oxygen, nitrogen, and sulfur, it being possible for the nitrogen ring members to have a group $R^2$, and for 1 or 2 carbon ring members to be present in the form of a carbonyl group,
$R^1$ is hydrogen, $C_1$-$C_4$ alkyl or benzyl, and
$R^2$ is hydrogen, $C_1$-$C_4$ alkyl or benzyl.

3. The process according to claim 1 or 2, wherein said at least one dispersant comprises at least one group from the series of carboxyester, carboxyl, phosphono, sulfino, sulfo, sulfamido, sulfoxy, sulfoalkyloxy, sulfinoalkyloxy, and phosphonooxy group.

4. The process according to claim 1, wherein said at least one dispersant comprises a polycondensation product comprising

(II) a structural unit containing an aromatic or heteroaromatic and a polyether group,
(III) a phosphated structural unit containing an aromatic or heteroaromatic.

5. The process according to claim 4, wherein the structural units (II) and (III) are represented by the following general formulae

(II) $A-U-(C(O))_k-X-(AlkO)_n-W$

where

A is identical or different and is represented by a substituted or unsubstituted, aromatic or heteroaromatic compound having 5 to 10 carbons in the aromatic system, the other radicals possessing the definition stated for structural unit (I); (III)

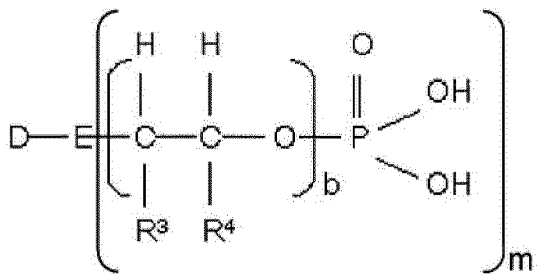

where

D is identical or different and is represented by a substituted or unsubstituted, aromatic or heteroaromatic compound having 5 to 10 carbons in the aromatic system where
E is identical or different and is represented by N, NH or O
where
m = 2 if E = N and m = 1 if E = NH or O
where
$R^3$ and $R^4$ independently of one another are identical or different and are represented by a branched or unbranched $C_1$ to $C_{10}$ alkyl radical, $C_5$ to $C_8$ cycloalkyl radical, aryl radical, heteroaryl radical or H

where b
is identical or different and is represented by an integer from 0 to 300.

**6.** The process according to claim 4 or 5, wherein the polycondensation product comprises a further structural unit (IV) which is represented by the following formula

(IV)

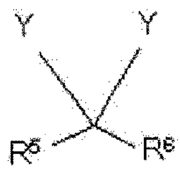

where
Y independently at each occurrence is identical or different and is represented by (II), (III) or further constituents of the polycondensation product.

**7.** The process according to claim 1 or 2, wherein said at least one dispersant comprises at least one copolymer which is obtainable by polymerization of a mixture of monomers comprising

(V) at least one ethylenically unsaturated monomer which comprises at least one radical from the series of carboxylic acid, carboxylic salt, carboxylic ester, carboxylic amide, carboxylic anhydride, and carboxylic imide and
(VI) at least one ethylenically unsaturated monomer comprising a polyether group.

**8.** The process according to claim 7, wherein the ethylenically unsaturated monomer (V) is represented by at least one of the following general formulae from the group of (Va), (Vb), and (Vc)

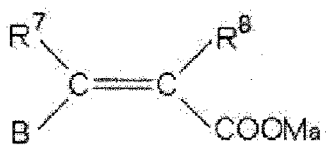

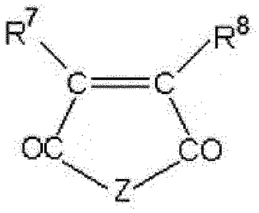

(Va) (Vb)

where

$R^7$ and $R^8$ independently of one another are hydrogen or an aliphatic hydrocarbon radical having 1 to 20 carbons
B is H, $-COOM_a$, $-CO-O(C_qH_{2q}O)_r-R^9$, $-CO-NH-(C_qH_{2q}O)_r-R^9$
M is hydrogen, a mono-, di- or trivalent metal cation, ammonium ion or an organic amine radical
a is 1/3, 1/2 or 1
$R^9$ is hydrogen, an aliphatic hydrocarbon radical having 1 to 20 carbons, a cycloaliphatic hydrocarbon radical having 5 to 8 carbons, an optionally substituted aryl radical having 6 to 14 carbons
q independently for each $(C_qH_{2q}O)$ unit is identical or different and is 2, 3 or 4 and
r is 0 bis 200
Z is O, $NR^{16}$
$R^{16}$ independently at each occurrence is identical or different and is represented by a branched or unbranched $C_1$ to $C_{10}$ alkyl radical, $C_5$ to $C_8$ cycloalkyl radical, aryl radical, heteroaryl radical or H

,

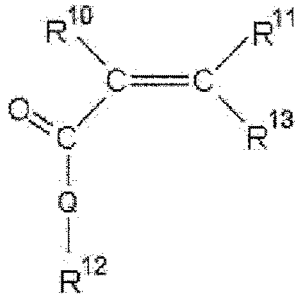

(Vc)

where

$R^{10}$ and $R^{11}$ independently of one another are hydrogen or an aliphatic hydrocarbon radical having 1 to 20 carbons, a cycloaliphatic hydrocarbon radical having 5 to 8 carbons, an optionally substituted aryl radical having 6 to 14 carbons

$R^{12}$ is identical or different and is represented by $(C_nH_{2n})$-$SO_3H$ with n = 0, 1, 2, 3 or 4, $(C_nH_{2n})$ -OH with n = 0, 1, 2, 3 or 4; $(C_nH_{2n})$-$PO_3H_2$ with n = 0, 1, 2, 3 or 4, $(C_nH_{2n})$-$OPO_3H_2$ with n= 0, 1, 2, 3 or 4, $(C_6H_4)$-$SO_3H$, $(C_6H_4)$-$PO_3H_2$, $(C_6H_4)$-$OPO_3H_2$ and $(C_nH_{2n})$ -$NR^{14}_b$ with n = 0, 1, 2, 3 or 4 and b = 2 or 3

$R^{13}$ is H, -$COOM_a$, -CO-O$(C_qH_{2q}O)_r$-$R^9$, -CO-NH-$(C_qH_{2q}O)_r$-$R^9$,

where $M_a$, $R^9$, q and r possess definitions stated above $R^{14}$ is hydrogen, an aliphatic hydrocarbon radical having 1 to 10 carbons, a cycloaliphatic hydrocarbon radical having 5 to 8 carbons, an optionally substituted aryl radical having 6 to 14 carbons.

Q is identical or different and is represented by NH, $NR^{15}$ or O;

where $R^{15}$ is an aliphatic hydrocarbon radical having 1 to 10 carbons, a cycloaliphatic hydrocarbon radical having 5 to 8 carbons or an optionally substituted aryl radical having 6 to 14 carbons.

**9.** The process according to any of claims 1 to 8, wherein said at least one dispersant comprises at least one water-soluble polymer which has an average molar weight (Mw) of between 5000 and 150 000 g/mol as determined by gel permeation chromatography.

**10.** The process according to any of claims 1 to 9, where the components

aa) at least one component selected from the series of hydraulic binders and/or latent hydraulic binders, and
bb) at least one dispersant suitable for the dispersing of inorganic particles in water, and
cc) water,
are contacted with one another until
the suspended matter fraction M is greater than 25 wt%, M being determined by the following method:

a) preparing a suspension by making up 2 grams of the composition, based on the solids fraction, to a volume of 100 ml with distilled water
b) transferring the suspension to a measuring cylinder to reach a height of 20 cm in the measuring cylinder
c) leaving the cylinder to stand at 20°C for 24 hours
d) fully decanting the supernatant into a beaker
e) carrying out quantitative determination of the mass m and the solids content SC for

i) the sediment in the measuring cylinder ($m_{sediment}$ and $SC_{sediment}$) and
ii) the supernatant ($m_{supernatant}$ und $SC_{supernatant}$),

the suspended matter fraction M being calculated as follows:

$$M = SC_{supernatant} \cdot m_{supernatant} / (SC_{sediment} \cdot m_{sediment} + SC_{supernatant} \cdot m_{supernatant}) \cdot 100\%.$$

**11.** The process according to any of claims 1 to 10, wherein the weight ratio of components aa) to bb) is between 10:1 and 1:2.

12. The process according to any of claims 1 to 11, wherein said component aa) is a hydraulic binder, more particularly Portland cement.

13. The use of a composition produced according to any of claims 1 to 10 for accelerating hardening of chemical mixtures in construction, comprising cement, slag, preferably granulated blast furnace slag, flyash, finely ground silica, metakaolin, natural pozzolans, calcined oil shale, calcium sulfoaluminate cements and/or calcium aluminate cements, preferably in chemical mixtures in construction which comprise predominantly cement as hydraulic binder.

## Revendications

1. Procédé de préparation d'une composition qui convient comme accélérateur pour le durcissement de ciment, les composants

   aa) au moins un
   liant hydraulique et
   bb) au moins un dispersant, qui convient pour la dispersion de particules inorganiques dans de l'eau et cc) de l'eau,
   étant mis en contact les uns avec les autres, la mise en contact ayant lieu avec introduction d'énergie de cisaillement, plus de 100 kWh d'énergie de cisaillement par tonne de composition étant introduits et
   le rapport en poids des composants aa) à cc) se situant entre 1,5:1 et 1:70, **caractérisé en ce que**
   le rapport en poids des composants aa) à bb) se situe entre 20:1 et 1:2.

2. Procédé selon la revendication 1, **caractérisé en ce que** ledit au moins un dispersant comprend un polymère soluble dans l'eau présentant des groupes polyéther de motif structural (I),

$$*\text{-U-(C(O))}_k\text{-X-(AlkO)}_n\text{-W} \qquad (I)$$

   dans lequel

   * représente le site de liaison au polymère,
   U représente une liaison chimique ou un groupe alkylène comprenant 1 à 8 atomes de carbone,
   X signifie oxygène, soufre ou un groupe $NR^1$,
   k vaut 0 ou 1,
   n représente un nombre entier dont la valeur moyenne, par rapport au polymère, se situe dans la plage de 3 à 300, Alk représente $C_2$-$C_4$-alkylène, Alk au sein du groupe $(Alk\text{-}O)_n$ pouvant être identique ou différent,
   W signifie hydrogène, un radical $C_1$-$C_6$-alkyle ou un radical aryle ou le groupe Y-F,
   Y représentant un groupe alkylène linéaire ou ramifié, comprenant 2 à 8 atomes de carbone, qui peut porter un cycle phényle,
   F représentant un hétérocycle azoté lié par azote, de 5 à 10 chaînons, qui peut présenter, comme chaînons de cycle, outre l'atome d'azote et outre les atomes de carbone, 1, 2 ou 3 hétéroatomes supplémentaires, choisis parmi l'oxygène, l'azote et le soufre, les chaînons azotés de cycle pouvant présenter un groupe $R^2$ et 1 ou 2 chaînons carbonés de cycle pouvant se trouver sous forme de groupe carbonyle,
   $R^1$ représente hydrogène, $C_1$-$C_4$-alkyle ou benzyle et
   $R^2$ représente hydrogène, $C_1$-$C_4$-alkyle ou benzyle.

3. Procédé selon la revendication 1 ou 2, **caractérisé en ce que** ledit au moins un dispersant comprend au moins un groupe de la série groupe carboxyester, carboxy, phosphono, sulfino, sulfo, sulfamide, sulfoxy, sulfoalkyloxy, sulfinoalkyloxy et phosphono-oxy.

4. Procédé selon la revendication 1, **caractérisé en ce que** ledit au moins un dispersant comprend un produit de polycondensation, contenant

   (II) un motif structural présentant un aromatique ou un hétéroaromatique et un groupe polyéther,
   (III) un motif structural phosphaté présentant un aromatique ou un hétéroaromatique.

5. Procédé selon la revendication 4, **caractérisé en ce que** les motifs structuraux (II) et (III) sont représentés par les formules générales suivantes

(II) A-U-$(C(O))_k$-X-$(AlkO)_n$-W

dans laquelle

A est identique ou différent et représente un composé aromatique ou hétéroaromatique, substitué ou non substitué comprenant 5 à 10 atomes de carbone dans le système aromatique, les autres radicaux présentant la signification mentionnée pour le motif structural (I) ;

(III)

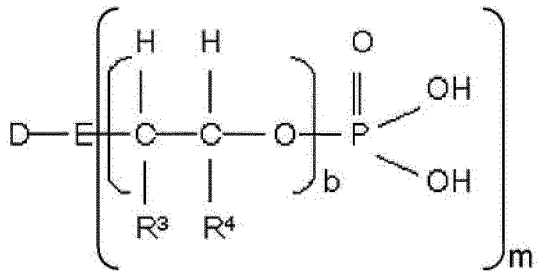

dans laquelle

D est identique ou différent et représente un composé aromatique ou hétéroaromatique, substitué ou non substitué comprenant 5 à 10 atomes de carbone dans le système aromatique
où
E est identique ou différent et représente N, NH ou O où
m = 2 si E = N et m = 1 si E = NH ou O
où
$R^3$ et $R^4$ sont, indépendamment l'un de l'autre, identiques ou différents et représentent un radical $C_1$-$C_{10}$-alkyle ramifié ou non ramifié, un radical $C_5$-$C_8$-cycloalkyle, un radical aryle, un radical hétéroaryle ou H
où b
est identique ou différent et représente un nombre entier de 0 à 300.

6. Procédé selon la revendication 4 ou 5, **caractérisé en ce que** le produit de polycondensation contient un autre motif structural (IV), qui est représenté par la formule suivante

(IV)

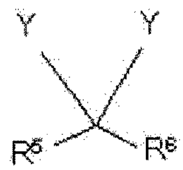

dans laquelle
Y est, indépendamment l'un de l'autre, identique ou différent et représente (II), (III) ou d'autres constituants du produit de polycondensation

7. Procédé selon la revendication 1 ou 2, **caractérisé en ce que** ledit au moins un dispersant comprend au moins un copolymère qui peut être obtenu par polymérisation d'un mélange de monomères, comprenant

(V) au moins un monomère éthyléniquement insaturé, qui comprend au moins un radical de la série acide carboxylique, sel d'acide carboxylique, ester d'acide carboxylique, amide d'acide carboxylique, anhydride d'acide carboxylique et imide d'acide carboxylique et
(VI) au moins un monomère éthyléniquement insaturé, comprenant un groupe polyéther.

8. Procédé selon la revendication 7, **caractérisé en ce que** le monomère éthyléniquement insaturé (V) est représenté

par au moins l'une des formules générales suivantes du groupe (Va), (Vb) et (Vc)

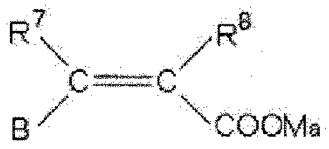

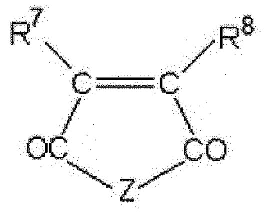

(Va) (Vb)

dans lesquelles

$R^7$ et $R^8$ représentent, indépendamment l'un de l'autre, hydrogène ou un radical hydrocarboné aliphatique comprenant 1 à 20 atomes de carbone,
B représente H, $-COOM_a$, $-CO-O(C_qH_{2q}O)_r-R^9$, $-CO-NH-(C_qH_{2q}O)_r-R^9$
M représente hydrogène, un cation métallique monovalent, bivalent ou trivalent, un ion d'ammonium ou un radical amine organique
a représente 1/3, 1/2 ou 1
$R^9$ représente hydrogène, un radical hydrocarboné aliphatique comprenant 1 à 20 atomes de carbone, un radical hydrocarboné cycloaliphatique comprenant 5 à 8 atomes de carbone, un radical aryle le cas échéant substitué comprenant 6 à 14 atomes de carbone,
q vaut, indépendamment pour chaque motif $(C_qH_{2q}O)$, de manière identique ou différente, 2, 3 ou 4 et
r vaut 0 à 200
Z représente O, $NR^{16}$
$R^{16}$ représente, indépendamment, de manière identique ou différente, un radical $C_1$-$C_{10}$-alkyle ramifié ou non ramifié, un radical $C_5$-$C_8$-cycloalkyle, un radical aryle, un radical hétéroaryle ou H

,

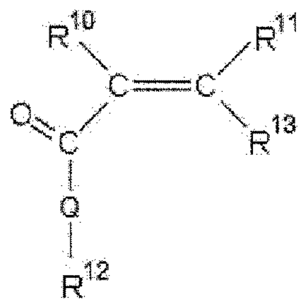

(Vc)

dans laquelle

$R^{10}$ et $R^{11}$ représentent, indépendamment l'un de l'autre, hydrogène ou un radical hydrocarboné aliphatique comprenant 1 à 20 atomes de carbone, un radical hydrocarboné cycloaliphatique comprenant 5 à 8 atomes de carbone, un radical aryle le cas échéant substitué comprenant 6 à 14 atomes de carbone,
$R^{12}$, de manière identique ou différente, représente $(C_nH_{2n})-SO_3H$ avec n = 0, 1, 2, 3 ou 4, $(C_nH_{2n})$ -OH avec n = 0, 1, 2, 3 ou 4 ; $(C_nH_{2n})-PO_3H_2$ avec n = 0, 1, 2, 3 ou 4, $(C_nH_{2n})-OPO_3H_2$ avec n= 0, 1, 2, 3 ou 4, $(C_6H_4)-SO_3H$, $(C_6H_4)-PO_3H_2$, $(C_6H_4)-OPO_3H_2$ et $(C_nH_{2n})-NR^{14}{}_b$ avec n = 0, 1, 2, 3 ou 4 et b = 2 ou 3
$R^{13}$ représente H, $-COOM_a$, $-CO-O(C_qH_{2q}O)_r-R^9$, $-CO-NH-(C_qH_{2q}O)$, $-R^9$, où $M_a$, $R^9$, q et r possèdent les significations susmentionnées
$R^{14}$ représente hydrogène, un radical hydrocarboné aliphatique comprenant 1 à 10 atomes de carbone, un radical hydrocarboné cycloaliphatique comprenant 5 à 8 atomes de carbone, un radical aryle le cas échéant substitué comprenant 6 à 14 atomes de carbone,
Q, de manière identique ou différente, représente NH, $NR^{15}$ ou O ;
$R^{15}$ représentant un radical hydrocarboné aliphatique comprenant 1 à 10 atomes de carbone, un radical hydrocarboné cycloaliphatique comprenant 5 à 8 atomes de carbone ou un radical aryle le cas échéant substitué comprenant 6 à 14 atomes de carbone.

**9.** Procédé selon l'une des revendications 1 à 8, **caractérisé en ce que** ledit au moins un dispersant comprend au moins un polymère soluble dans l'eau, qui présente un poids moléculaire moyen (Mw) entre 5000 et 150.000 g/mole, qui est déterminé par chromatographie par perméation de gel.

**10.** Procédé selon l'une des revendications 1 à 9, les composants

aa) au moins un composant choisi dans la série constituée par les liants hydrauliques et/ou les liants hydrauliques latents et
bb) au moins un dispersant, qui convient pour la dispersion de particules inorganiques dans de l'eau et cc) de l'eau,
sont mis en contact les uns avec les autres pendant une durée telle que
la proportion de substances en suspension M est supérieure à 25% en poids,
M étant déterminé selon la méthode suivante :

a) préparation d'une suspension dans laquelle 2 grammes de composition, par rapport à la proportion de solides, sont complétés à un volume de 100 ml par de l'eau distillée,
b) transvasement de la suspension dans un cylindre de mesure, de telle sorte qu'une hauteur de 20 cm est atteinte dans le cylindre de mesure,
c) repos de 24 heures à 20°C,
d) décantation complète du surnageant dans un bécher,
e) détermination quantitative de la masse m et de la teneur en solides FG pour

i) le sédiment dans le cylindre de mesure ($m_{Sédiment}$ et $FG_{Sédiment}$) et
ii) le surnageant ($m_{Surnageant}$ et $FG_{Surnageant}$),

la proportion de substances en suspension M étant calculée comme suit :

$$M - FG_{Surnageant} \cdot m_{Surnageant} / (FG_{Sédiment} \cdot m_{Sédiment} + FG_{Surnageant} \cdot m_{Surnageant}) \cdot 100\ \%.$$

**11.** Procédé selon l'une des revendications 1 à 10, **caractérisé en ce que** la proportion en poids des composants aa) à bb) se situe entre 10:1 et 1:2.

**12.** Procédé selon l'une des revendications 1 à 11, **caractérisé en ce qu'**il s'agit, pour le composant aa), d'un liant hydraulique, en particulier de ciment Portland.

**13.** Utilisation d'une composition préparée selon l'une des revendications 1 à 10, pour l'accélération du durcissement de mélanges chimiques de construction, contenant du ciment, des scories, de préférence des scories granulées de haut-fourneau, des cendres volantes, de la farine de silice, du métakaolin, des pouzzolanes naturelles, des schistes bitumeux calcinés, des ciments de sulfoaluminate de calcium et/ou des ciments d'aluminate de calcium, de préférence dans des mélanges chimiques de construction qui contiennent majoritairement du ciment en tant que liant hydraulique.

Fig. 1

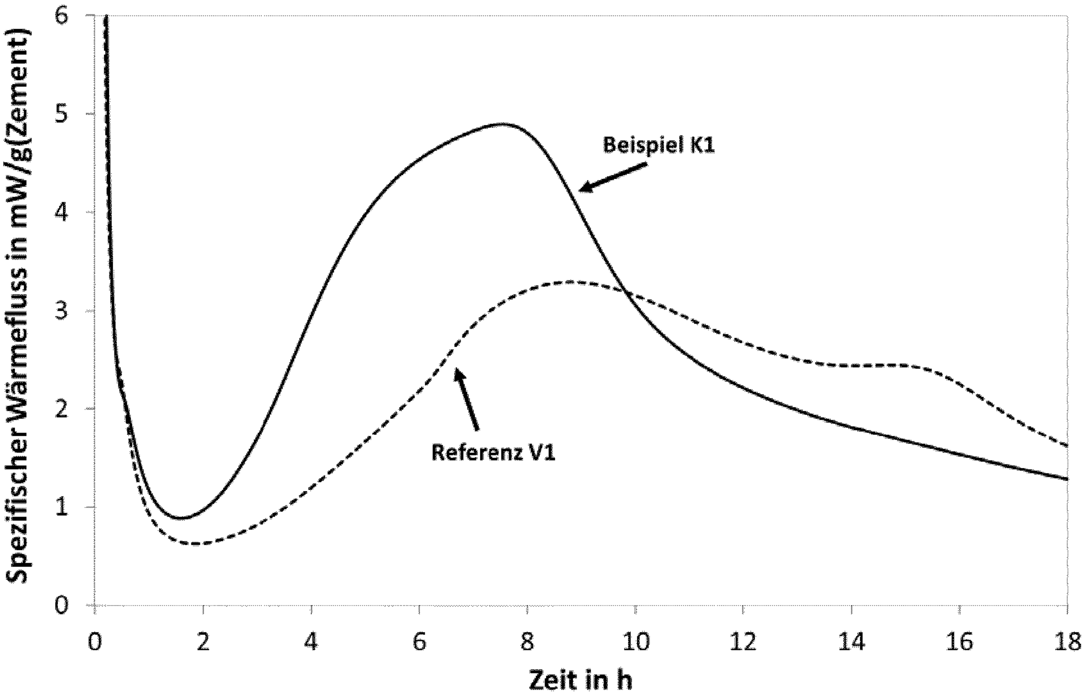
Spezifischer Wärmefluss in mW/g(Zement)
6
5
4
3
2
1
0
0
2
4
6
8
10
12
14
16
18
Zeit in h
Beispiel K1
Referenz V1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010026155 A
- DE 69407418
- WO 2006042709 A
- WO 2010040612 A
- WO 2015091461 A
- WO 2014026938 A


### In der Beschreibung aufgeführte Nicht-Patentliteratur


- **L. NICOLEAU.** The acceleration of cement hydration by seeding: Influence of the cement mineralogy. *Ibausil 18. Internationale Baustofftagung in Weimar,* 2012, 1-0330, 1-0337
- **VORTRAG C. HESSE.** Kleine Teilchen mir großer Wirkung - Neue Wege der Beschleunigung. *HeidelbergCement Bauchemie-Tage in Münster,* 2014